# EUROPEAN PATENT SPECIFICATION

(11) **EP 3 021 657 B1**
(45) Date of publication and mention of the grant of the patent: **20.12.2017**
(21) Application number: 14787284.0
(22) Date of filing: 23.09.2014
(51) Int. Cl.: A01D 45/02

(54) **FRONT ATTACHMENT UNIT FOR MAIZE CHOPPER**
VORBAUVORRICHTUNG FÜR EINEN MAISHÄCKSLER
UNITÉ DE FIXATION AVANT POUR UNE HACHEUSE DE MAÏS

(30) Priority: 23.09.2013 BE 201300627
(43) Date of publication of application: 25.05.2016
(73) Proprietor: Renders, Jos, 2390 Malle (BE); Kenis, Tim, 2990 Loenhout (BE)
(72) Inventor: Renders, Jos, 2390 Malle (BE); Kenis, Tim, 2990 Loenhout (BE)
(74) Representative: Pronovem
(86) International application number: PCT/IB2014/064765
(87) International publication number: WO 2015/040601

(56) References cited:
- EP-A1- 2 556 740
- WO-A1-2008/104816
- DE-A1-102010 051 887
- US-A- 3 680 291
- US-A- 4 251 980
- US-A1- 2013 081 369
- US-B1- 7 681 388

## Description

The present invention relates to a detachable front attachment unit for a maize chopper, which unit is configured to, in one operation, cut down the maize plant and separate the maize ears from the stem, wherein the maize ears and the maize stems are carried away separately. The invention also relates to a method for harvesting maize, in which, in one single operation, both the ears are separated from the stems, and the stems are chopped. The chopped stems and the separated ears are collected separately, with no chopping waste being returned to the field.

Since the turn of the century, maize has not only been grown as a food crop (for human consumption but mainly as animal feed), but also as an energy crop. In this case, the maize plants are used as biomass in a biogas installation to generate electricity. Harvesting maize for use as animal feed and for generating energy takes place in an identical manner. The maize is harvested by means of a (maize) chopper. In this case, the stem is cut, following which the entire plant - stem, leaf and ear (fruit) - is shredded, also referred to by the term 'chopped'. The animals, mainly cattle, are thus fed the kernel as well as the leaf and the stem parts. The same applies to the use as biomass: the entire chopped plant, i.e. including the maize kernels, is used as biomass in a biogas installation.

This is in contrast to the harvesting of maize as a food crop for livestock and humans. In this case, no chopper is used, but a combine harvester or threshing machine which only harvests the maize ears by separating them from the stem. The ears can be further treated by a threshing machine, in which case the maize kernels are separated from the cob of the ear. When using threshing machines, the stem is usually left on the field. Sometimes, in an operation following the threshing, a chopper will drive across the field to cut the stems and shred and collect them. However, such method is laborious and has as drawback that the stems have meanwhile been in contact with the ground, as a result of which any dirt adhering to the stems is also collected.

With a view to a more efficient use of the food crops, and for economical reasons related to the rising price of maize as raw material, the inventors have come up with the idea to in one single operation harvest both the maize ears and the stems and to collect these separately. The maize ears are subsequently used as a food raw material for humans and animals, while the stems can be used as biomass.

Document CN 202172599 U describes a maize-harvesting machine with a combined threshing and cutting head, wherein the maize ears and the stems are separated from one another and carried away separately. From the construction of this chopper it can be seen that the stems are cut down first. Subsequently, the cut-down stems to which the maize ears are still attached, are simultaneously passed through a separating device (threshing section), wherein the ears are separated from the stems and passed through a shredder for the stover.

Document CN 101297617 describes a maize combine harvester which cuts the leaves and also smashes them.

Document US 2013/0081369 describes a maize-harvesting machine with a front attachment (head) comprising a bottom part and a top part. The top part consists of a reel assembly and a transverse conveyor belt for maize. The bottom part is configured to cut down maize stems and transport them away to a shredder. Alternatively, the cut-down stems may be thrown onto the field. From the construction of the front attachment, it can be seen that the top part and the bottom part almost simultaneously engage with a maize plant. This means that with this machine, the stems are cut down first and that, at the earliest simultaneously therewith, the stems engage with the device for separating the maize ears. A similar machine is described in CN 102498820.

US 3680291 describes a combined maize thresher/chopper which is configured to treat the maize kernels and the leaves separately and simultaneously. The machine is configured to separate the ears from the stems, to remove the husks and to separate the cob from the kernels. The stems are cut down and passed to a chopping device, where the husks and the cob come together.

The abovementioned vehicles appear to have been specifically designed to be used as a combined cutter, thresher and leaf shredder and cannot be used for other applications, e.g. only as a forage harvester. This results in significant associated costs of investment for the farmer.

In addition, the inventors have found that problems often occur with the above-described configurations when synchronously performing the actions of separating the ear and cutting and removing the stems/the leaves. There are often problems with regard to correctly guiding the cut-down stems to the chopper, inter alia because the stems are crumpled up by the ear separator. As a result thereof, the harvesting machine often has to be stopped, or harvesting has to be carried out at up to half the speed compared to a conventional maize chopper.

It is an aim of the present invention to remedy the problems from the prior art. In particular, it is an aim of the present invention to separately transport away the ears and the stems during harvesting of the maize with a greater reliability than the devices and methods from the prior art. It is an object of the invention to harvest maize faster, whilst the ears and the stems are transported away separately and the stems are shredded and collected.

Aspects of the invention also aim to provide a device for harvesting maize which can be used in a flexible way and does not involve additional investment costs.

According to an aspect of the invention, a front attachment unit is thus provided for a maize chopper (a self-propelled forage harvester) as explained in the attached claims.

The front attachment unit comprises a bottom part which has the function of a maize head for a self-propelled forage harvester (i.e., cutting down maize plants and conveying them to the forage harvester, also known as a cutting head) and a top part which has the function of ear picker, also known as a maize-threshing head. According to the invention, an intermediate frame is provided which is attachable to the bottom part and to the top part. The bottom part is also attachable to the forage harvester. Consequently, the intermediate frame and the bottom part may be detached from one another, so that the bottom part can also be used separately with the forage harvester, without an intermediate frame and top part. This makes it possible, on the one hand, at minimal additional cost, to convert an existing forage harvester and maize head to a combined device, which separates the ears from the maize plant and transports them away separately, before chopping the maize plant to form animal feed or biomass. On the other hand, the invention makes it possible to work in modular fashion, using a front attachment unit which is of modular construction, as a result of which it is possible to switch in a flexible manner between an only chopping function and a combined operation with simultaneous, separate ear removal.

Moreover, the use of the intermediate frame has additional advantages. Firstly, by way of a suitable design of the intermediate frame, it makes it possible to use front attachment units according to the invention on conventional forage harvesters without the latter having to be converted. In other words, the existing attachments means on the forage harvester can be used to mount the attachment unit without modifications being required. Secondly, the correct positioning between the bottom and top part can only be achieved by way of a suitable design of the intermediate frame. This makes it possible to use conventional heads (threshing heads and cutting heads, respectively) for both the top and the bottom part. The farmer usually already has these heads, thereby reducing the additional investment costs to a minimum. By simple removal of one or both parts from the intermediate frame, these can be used in the customary way. Consequently, the farmer can use the various components in a flexible manner.

According to an additional aspect of the invention, the top part is advantageously arranged with respect to the bottom part in such a manner that, during an operation of the forage harvester, a maize stem first engages with gripping means for gripping the maize plant in the top part, after which the stem is cut down by a cutting device in the bottom part.

According to a further aspect of the invention, a combination of the above-described front attachment unit and a self-propelled forage harvester is provided, as set out in the appended claims.

Aspects of the invention also provide a frame which exerts the function of the above-described intermediate frame, as set out in the appended claims.

A method for harvesting maize is also described.

Embodiments with additional advantages are set out in the dependent claims.

Aspects of the invention will be explained below with reference to the following figures, in which:
Figure 1 shows a front view of a front attachment unit according to the invention.
Figure 2 shows a side view of the front attachment unit from Figure 1 when fitted to a maize chopper.
Figure 3 shows a detail of the separating device which separates the maize ears from the stems.
Figure 4 shows a side view of another embodiment of a front attachment unit according to aspects of the invention.

In the present description, a maize chopper is to be understood as a (self-propelled) forage harvester which is suitable for cutting down and chopping maize. Such a chopper preferably does not comprise any devices for separately and simultaneously treating the maize ears (no integrated threshing functions).

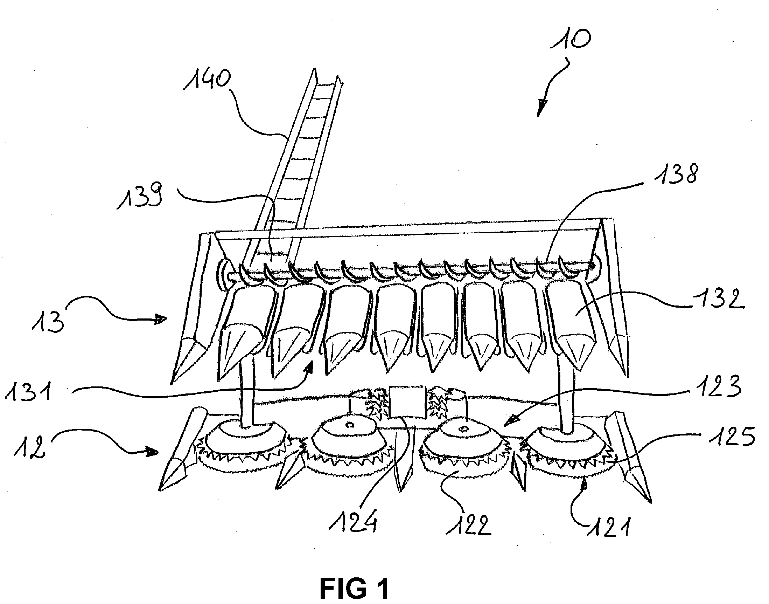

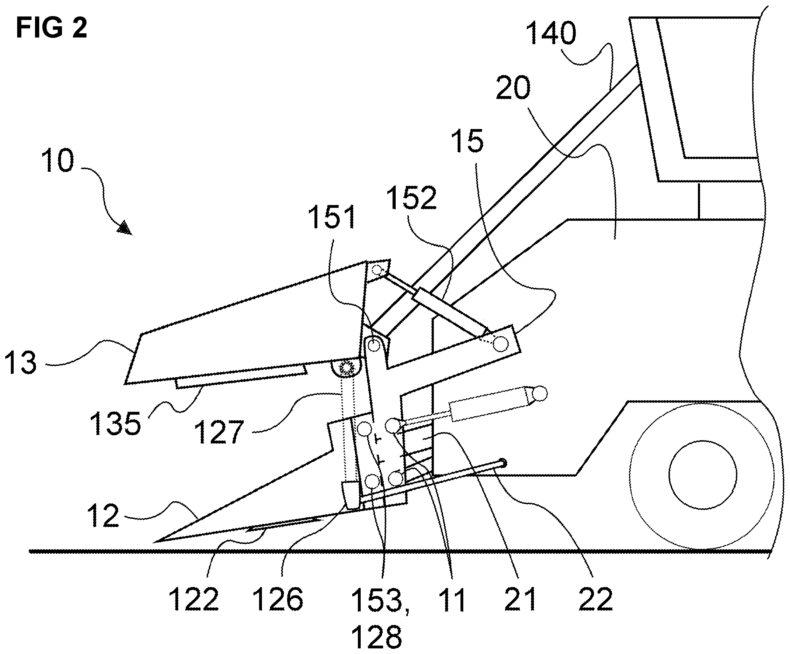

Figures 1 and 2 show a front attachment unit 10 according to an aspect of the invention, which is also referred to below as a chopping-threshing head. As will be further explained, the front attachment unit 10 is designed to be attached to an advantageously self-propelled forage harvester 20, as shown in Figure 2. Such a way of attachment is known and corresponds to the means which are provided on conventional self-propelled forage harvesters for attaching (chopping) heads. Advantageously, front attachment unit 10 is configured to be attached in a detachable manner at the front side of a chopper. Advantageously, front attachment unit 10 is configured to be attached to forage harvesters of different types and/or brands, rendering it suitable for universal use.

The front attachment unit 10 incorporates the functions of, on the one hand, cutting down maize stems and conveying them to the chopper 20 for shredding (function of a cutting/chopping head), and, on the other hand, separating maize ears from the maize stem (function of a threshing head). In order to carry out these functions, the front attachment unit comprises a first part 12 which is provided at the bottom side of the front attachment unit 10, and a second part 13 which is arranged above the first part. The first and the second parts 12, 13, respectively, are consequently arranged one above the other, so that they operate at a different level with respect to the field level.

The first part 12, also referred to as bottom part, provides the functions of a conventional maize head. To this end, the first part comprises a cutting device 121 for cutting (cutting down) the maize stems. Such cutting devices 121 are known and advantageously comprise horizontally arranged cutting discs 122 which are configured to rotate around a substantially vertical shaft. The cutting discs 122 are provided to cut down the maize stem.

The bottom part 12 furthermore comprises a device 123 (hereinafter feed device) for conveying the cut-down stems to a feed opening 124. Such feed devices 123 are known and may comprise a series of horizontally arranged toothed discs 125 which are configured to convey the cut-down stems to the feed opening 124. The feed device 123 consequently provides for the conveyance of the cut-down stems from the cutting device 121 to the feed opening 124.

Front attachment units for maize choppers integrating a cutting device 121, a feed device 123 and feed opening 124, as is the case with the bottom part 12, are referred to as maize heads, chopping heads or cutting heads. Each of these terms refers to a front attachment unit for a forage harvester for cutting down maize stems and conveying them to the forage harvester where they are chopped. The heads themselves preferably have no provision for chopping maize plants.

Advantageously, the bottom part is formed by a row-independent chopping head. These last-mentioned chopping heads comprise cutting discs 122 and a series of toothed discs 125 which are mounted concentrically to each other, as shown in Figure 1. Such chopping heads advantageously comprise additional toothed discs on either side of the feed opening 124.

Row-independent chopping heads are chopping heads which ensure reliable operation irrespective of the direction in which the chopper approaches the maize plants, which direction does not necessarily have to be parallel to the rows of the maize. The inventors have found that the use of such heads in front attachment units according to the invention results in a reduction in blockage of the feed opening 124.

Row-independent chopping heads are described in EP 2071934 and EP 1317879. Kemper Maschinenfabrik is a manufacturer of such chopping heads, which are advantageously incorporated in front attachment units according to the invention.

When the front attachment unit 10 is fitted to a chopper 20, as is shown in Figure 2, the feed opening 124 is connected to an inlet 21 of the chopper. From this inlet 21, the stems are conveyed to the shredder (chopping device, not shown) which is provided in the chopper 20.

The second part 13, which is referred to below as the top part, incorporates the functions of a conventional maize-threshing head. It comprises a device 131 (hereinafter separating device) for separating the maize ears from the maize stems. Such devices are known from conventional maize-threshing heads.

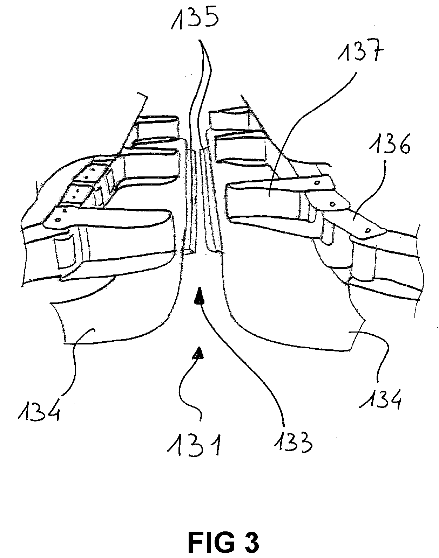

The top part 13 advantageously comprises a number of adjacent separating devices 131 which together span the width of the cutting device 121 of the bottom part. A plant guide 132 is provided between each pair of separating devices 131 and forms a partition between adjacent separating devices 131. Figure 3 shows a perspective view of a separating device 131. It comprises a slot 133 which is arranged according to the direction of operation of the chopper 20 and is formed by two spaced-apart slats 134. Slot 133 is sufficiently wide to move a maize stem through the slot and sufficiently small to ensure that a maize ear cannot pass through it.

Furthermore, the separating device comprises a pair of gripper blades 135 which are arranged opposite one another. Blades 135 are arranged underneath the slats 134 and have a cutting edge which runs parallel to slot 133. The distance between the cutting edges of opposite blades (between the blades 135) is slightly smaller than the width of slot 133. Gripper blades 135 are moreover configured to rotate about a shaft running according to slot 133. Advantageously, several blades 135 are radially arranged at different angles around each rotation shaft. Consequently, a set of gripper blades 135 is arranged on either side of each slot 133 so as to extend radially around a rotation shaft running parallel to the slot 133.

A maize stem is guided into the slot 133 by plant guides 132. The stem will engage with the gripper blades 135, but without this stem being cut. The blades 135 rotate in opposition to each other and such that the maize stem is pushed downwards. With such a downward movement of the stem, maize ears will be blocked by the slats 134 and break away from the stem.

Alternatively, gripper blades 135 may be replaced by a pair of rollers which have the function of gripping the stem and moving it downward.

Optionally, a pulling device for the maize plants may be provided on either side of slot 133, which pulling device may be formed by a chain 136 provided with hooks 137 in order to pull the maize plants into the slot 133.

Other possible and suitable embodiments of separating devices 131 may also be used on front attachment units according to the invention. However, it is important that such separating devices can separate the maize ears without cutting off the stem. Advantageously, the top part 13 consequently does not comprise a device for cutting down the maize stem.

Advantageously, the separating device 131 of the top part 13, and the arrangement of the top part (the separating device 131) with respect to the bottom part ensures that, during its treatment by the separating device, the stem is damaged as little as possible. This ensures that the handling of the stem by the bottom part 12 (i.e. transporting the cut-down stem to the chopper 20) can take place correctly.

Due to the constant supply of new plants in the slot 133 and/or to the action of the chain hooks 137, the separated maize ears are transported to the back, where they are conveyed to an outlet by a conveying device. The conveying device may be a conveyor belt or comprise an auger 138 which is arranged behind the separating devices and runs transversely to the operating direction of the maize chopper 20 (i.e. at right angles to front attachment unit 10). Conveying device 138 is provided to convey the maize ears to an outlet 139 of the top part 13. Preferably, the ears undergo no further treatment in the top part, i.e. the top part advantageously only ensures that the ears are separated from the maize plant and transported to a receiving space, which may or may not be provided on the self-propelled forage harvester. It should be noted that front attachment units according to the invention are preferably used with standard self-propelled forage harvesters. Furthermore, these forage harvesters do not comprise a device for treating ears, i.e. no device for removing the husks and/or the cob.

A conveying unit 140 may be provided on the front attachment unit 10 and be connected to outlet 139 in order to move the maize ears to a higher level and further to a receiving space. The receiving space may be a storage container which is provided on the maize chopper 20 or which travels along with the chopper 20 as a trailer or as a separate vehicle.

While the feed opening 124 of the bottom part is advantageously provided centrally in such a way that it corresponds to the inlet of the maize chopper, the outlet 139 is preferably provided at a transverse end of the front attachment unit so the ears can be removed and collected more easily.

According to aspects of the invention, the front attachment unit 10 forms an independent unit which can, as such, be attached to and removed from a self-propelled maize chopper. In this respect, the front attachment unit comprises an intermediate frame 15 which is fixedly (i.e. non-movably) connected to the bottom part 12. The top part 13 is attached to the intermediate frame 15 via joint 151, so that the top part 13 can pivot with respect to the bottom part 12 in order for the top part to assume a different tilting position and/or height position. The pivoting movement of the top part 13 may be driven in a known manner, e.g. hydraulically. Advantageously, one or more hydraulic cylinders 152 is/are provided which is/are attached to the intermediate frame 15 by one end and to the top part 13 by the other end.

The intermediate frame 15 provides the correct positioning of the top part 13 with respect to the bottom part 12. To this end, the intermediate frame comprises fastening means 153 for detachably attaching the bottom part 12 to the intermediate frame 15. The fastening means 153 are similar to the fastening means 128 which are provided on the bottom part 12 for separately attaching the bottom part 12 to the forage harvester 20. The fastening means 153 and 128 are thus configured to cooperate (e.g. to engage or to receive the same bolts), so that the bottom part 12 is attached to the intermediate frame 15.

As is shown in Fig. 2, the intermediate frame 15 furthermore comprises fastening means 11, which differ from means 153, for detachably attaching the frame 15 to the forage harvester 20. In such a case, the intermediate frame 15 advantageously functions as a coupling between the forage harvester 20 and the bottom part 12. Advantageously, the fastening means 11 and 153 are similar to each other to such degree that when the intermediate frame 15 is removed from the forage harvester 20, and the bottom part 12 is removed from the intermediate frame 15, said bottom part 12 can be directly attached to the forage harvester 20. When the bottom part 12 is removed from the intermediate frame 15, a structure which comprises the intermediate frame 15 and the top part 13 is obtained.

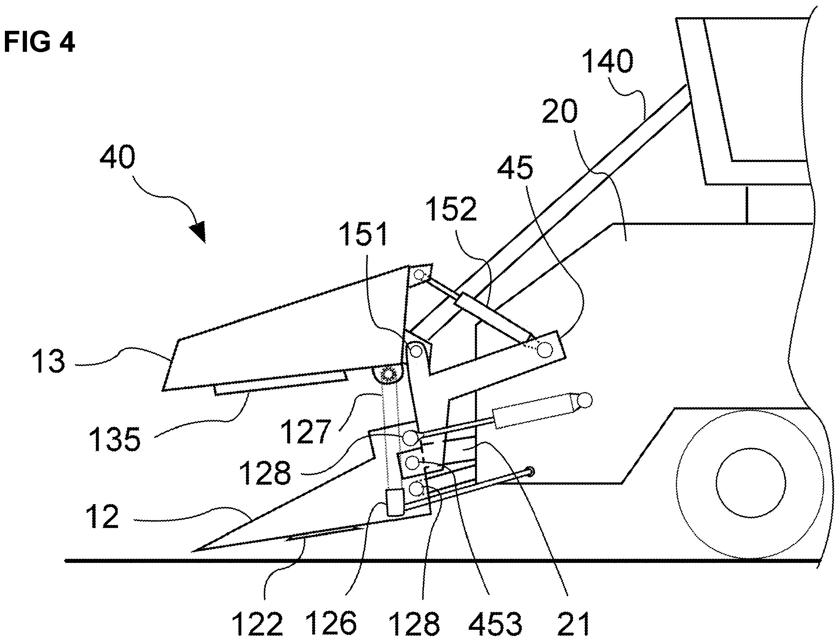

Fig. 4 shows an alternative embodiment of the intermediate frame. Intermediate frame 45 only differs from intermediate frame 15 in Fig. 2 in the way it is attached to the bottom part 12 and to the forage harvester 20. Intermediate frame 45 comprises fastening means 453 for detachably attaching the bottom part 12 to the intermediate frame 45. However, intermediate frame 45 does not comprise fastening means for attachment to the forage harvester 20. On the contrary, the front attachment unit 40 (bottom part 12, top part 13 and intermediate frame 45) is attached to the forage harvester 20 via the bottom part 12. In this embodiment, frame 45 consequently forms the coupling piece between the bottom and the top part, but not between the bottom part and the forage harvester. In this case, the fastening means 128 of the bottom part 12 serve to attach the front attachment unit 40 to the forage harvester 20.

The fastening means 153, 453, 128, 151 may consist of through-holes for bolts, fastening eyelets (e.g. for hydraulic cylinders), fastening hooks or any kind of means to attach two structures to each other.

It is clear from the above that the entire front attachment unit 10, 40 is advantageously attached to the maize chopper 20 in a customary manner via frame 15 or the bottom part 12, respectively. The fastening means 11, 128 provided for this purpose advantageously make it possible to move the front attachment unit in its entirety in order for the front attachment unit to assume a different tilting position and/or height position with respect to the chopper 20.

Consequently, both the embodiment 10 of Fig. 2 and the embodiment 40 of Fig. 4 make it possible to convert a conventional self-propelled forage harvester, comprising a conventional, known chopping head, to a combined harvesting machine for maize which chops and also picks the fruits (maize ears) in a simple manner and at minimal additional cost. According to the invention, it is sufficient to only provide the intermediate frame 15 or 45 and the top part (threshing head) 13, as the farmer who owns a self-propelled forage harvester will also own the bottom part (chopping head) 12. It is an additional advantage of the invention that the forage harvester remains convertible between, on the one hand, an operation involving only chopping and, on the other hand, a combined operation involving chopping and harvesting ears. After all, if the farmer wants to harvest a maize field using combined operation, it is sufficient if he mounts the intermediate frame 15, 45, on which the top part 13 is already provided, to the bottom part 12 and to mount the resulting front attachment header 10, 40 to the forage harvester. On the other hand, by simply detaching the front attachment unit from the forage harvester, detaching the intermediate frame from the bottom part and fitting the bottom part to the forage harvester, a conventional, operational forage harvester can be obtained again. The above clearly shows the modular construction of the front attachment units according to the invention. Consequently, the farmer can react to circumstances quickly , with minimal space requirements and without significant investments.

The fact that front attachment units can be obtained for different types of self-propelled forage (maize) harvesters by only adjusting the dimensions of the intermediate frame 15, 45 is an additional advantage of the invention. Since the position of the top part 13 only depends on the intermediate frame and not on the bottom part, the choice of the top part is brand independent.

Alternatively, it is possible to fixedly (but detachably) connect the frame 15 to the top part and to pivotably attach the bottom part to the frame 15.

Driving the different devices of the front attachment unit, such as the cutting device 121 and the feed device 123 of the bottom part and the separating device 131 and conveying device 138 of the top part, may be effected mechanically in conventional ways. By way of example, and referring to Fig. 2, devices of the bottom part may be driven via a cardan coupling 22 between the maize chopper 20 and a gearbox 126 of the bottom part 12. Gearbox 126 drives the devices of the bottom part 12 and may also drive devices of the top part 13 via a chain transmission 127, which can advantageously be controlled independently of gearbox 126, so that the operating speed of devices of the top part can be controlled (independently) in relation to the operating speed of devices of the bottom part. This has the advantage that one and the same front attachment unit can be used to harvest different types of maize plants while ensuring great reliability. Alternatively, devices of the top part 13, such as the separating device 131 and conveying device 138, can be driven hydraulically, in which case their operating speed can be controlled independently of the bottom part. It goes without saying that devices of the bottom part may also be driven hydraulically in accordance with conventional methods.

The inventors have found that the order in which cutting down and separating ears takes place is important to ensure carefree operation of the chopper. The reason for this is that, with a conventional chopping head, the entire, cut-down plant is passed to the chopper, including the maize ears, whereas with headers according to the invention, only the stems are evacuated via feed opening 124. In addition, these stems are crumpled up as a result of the passage through the separating devices 131 of the top part.

This is remedied according to the invention by cutting down the stem after the stem has engaged with the separating device 131. Advantageously, the cutting device 121 and the separating device 131 are arranged or positioned with respect to each other in such a way that, during an operation, the stem is only cut down by the cutting device when the stem is already in engagement with the separating device 131. This measure ensures improved transportation of the maize stems treated by the separating device 131, so that the risk of blockage of the feed opening 124 is reduced.

In particular, the gripper blades 135 and the cutting discs 122 are positioned with respect to each other in such a way (see Fig. 2) that the cutting discs 122 are arranged at a position behind, or downstream (according to the direction of flow of the maize plants) of, the front (upstream) end of the gripper blades 135. Advantageously, this mutual position is such that, during an operation of the maize chopper, a maize stem first engages with the gripper blades 135 of the separating device 131, after which the stem is cut down by the cutting discs 122 of the cutting device 121.

An additional advantage of such arrangements is that they ensure that no maize ears can pass through the feed opening 124 and be undesirably chopped. This means that all ears can be harvested separately from the stem.

The separation of the maize ears by the separating device 131 and the cutting down of the stems by the cutting device 121 advantageously takes place approximately simultaneously. Consequently, the mutual position between cutting discs 122 and gripper blades 135 and/or slot 133 is advantageously such that the above operation is made possible. Advantageously, the position of the (cutting edge of) cutting discs 122 lies between the end positions along which the gripper blades 135 and the slot 133 extend considered according to an operation pass of the chopper. This makes it possible to separate the ears, while damaging the stem as little as possible.

The front attachment unit 10 according to the invention makes it possible to, in one single operation, harvest both the maize ears and the maize stems and to move these away separately and/or collect them, without any waste remaining on the field. With reference to Figures 1, 2 and 3, the front attachment unit 10 is arranged on the front side of a self-propelled maize chopper 20. The positioning of the bottom and the top part of the front attachment unit 10 with respect to each other has the effect that, during an operation of the chopper 20, the maize stem first engages with the separating device 131 (gripper blades/gripper rollers 135) and is only subsequently cut down by the cutting device 121 (cutting discs 122). It should be noted that the maize stem will still be in engagement with the separating device 131 at the time at which the stem is cut down.

After the stems have been cut down, the stem is conveyed to the feed opening 124 by means of feed device 123, while the stem is pulled through the separating device (by blades 135), with the ears being separated. After the maize ears have been separated, and advantageously after the stem has passed through the separating device 131 completely, the stems end up in the feed opening 124, following which they land in the chopper and are shredded. The stem pieces are advantageously collected via a discharge pipe of chopper 20 in a storage container which differs from the storage container for the maize ears. This results in the chopped stover and the ears being harvested and collected separately in one single operation, and with one single machine.

The chopped stover can be used as biomass for generating heat and/or electrical energy, while the maize ears can be further processed. The maize ears can then be stripped from the husks and the cob at the farmer's property by means of a stationary threshing machine. The maize kernels can be used as animal feed or in the foods industry, while the husks and cob can also be used as biomass.

Advantageously, separately harvesting leaves and maize ears also makes it possible to improve the feeding of cows, and in particular dairy cows. During the rest period in which a cow does not give milk, it can generally be observed that the cow fattens considerably due to the fats contained in the animal feed. As a result of the separate harvest, it now becomes possible to use chopped stover which does not contain maize kernels as feed. Such feed is less rich in energy than feed obtained by chopping the maize plant as a whole. The separate harvesting of the maize ears then makes it possible to use more maize kernels during the period that the cow gives milk.

Front attachment units according to the invention advantageously make it possible to harvest maize at the same speed as with a conventional maize chopper. Advantageously, the chopped maize plants processed via the front attachment units of the invention contain a minimal amount of ash. What is important, however, is the flexibility offered to the farmer, who will be able to easily switch between two types of operations.

## Claims

1. Detachable front attachment unit (10, 40) for a self-propelled maize chopper (20), comprising:
- a bottom part (12) comprising a cutting device (121) configured to cut down maize plants, and a feed device (123) configured to evacuate the cut-down plants to a feed opening (124) which, following mounting of the front attachment unit to the maize chopper, is configured to communicate with an inlet opening (21) of the maize chopper, wherein the bottom part comprises fastening means (128) for direct attachment to the maize chopper, and
- a top part (13) which is arranged above the bottom part, wherein the top part and the bottom part (12) can be pivotably arranged with respect to each other, wherein the top part comprises a separating device (131) configured to separate the maize ears from the stem, a conveying device (138) and an outlet (139), wherein the conveying device is configured to convey the separated maize ears to the outlet, and wherein the separating device comprises gripping means (135) to engage with the maize stem and separating means (133, 134) to separate the ears from the stem,
**characterised in that** the top part (13) is arranged with respect to the bottom part (12) in such a manner that, during operation of the maize chopper, a maize stem first engages with the gripping means (135) of the separating device, after which the stem is cut down by the cutting device (121) of the bottom part, and
**in that** the front attachment unit (10, 40) comprises an intermediate frame (15, 45), wherein the intermediate frame comprises first fastening means (153, 453) for attaching the bottom part (12) to the intermediate frame (15, 45) and second fastening means (151, 152) for attaching the top part (13) to the intermediate frame, wherein the bottom part is configured to be attached to the intermediate frame in a detachable way via the first fastening means (153, 453), so that the bottom part can be used for the maize chopper both separately, without the intermediate frame and top part, and integrated in the front attachment unit.

2. Front attachment unit according to claim 1, wherein the bottom part is a row-independent head for self-propelled maize chopper.

3. Front attachment unit (10) according to any one of the preceding claims, wherein the intermediate frame (15) comprises third fastening means (11) for attaching the intermediate frame (15) to the maize chopper (20).

4. Front attachment unit (10) according to any one of the preceding claims, wherein the first fastening means (153) of the intermediate frame (15) are configured for attachment to the fastening means (128) of the bottom part (12).

5. Front attachment unit (40) according to claim 1 or 2, which is configured to be attached to the maize chopper (20) by attachment via the fastening means (128) of the bottom part (12).

6. Front attachment unit according to any one of the preceding claims, wherein the second fastening means (152) provide a pivotable attachment of the top part (13) to the intermediate frame (15).

7. Front attachment unit according to any one of the preceding claims, wherein the cutting device (121) is arranged downstream with respect to the gripping means (135).

8. Front attachment unit according to any one of the preceding claims, wherein the intermediate frame (15) comprises a transmission device configured to drive the top part (13).

9. Front attachment unit according to any one of the preceding claims, wherein an operating speed of the gripping means (135) can be controlled with respect to an operating speed of the cutting device (121) and/or of the feed device (123).

10. Front attachment unit according to any one of the preceding claims, wherein the feed opening (124) in the bottom part is arranged centrally, while the outlet (139) of the top part is arranged on a side.

11. Combination of a self-propelled maize chopper (20) and a front attachment unit (10) of any one of the preceding claims.

12. Combination according to claim 11, wherein the maize chopper (20) does not comprise a maize-threshing device.

13. Frame (15, 45) for use in a front attachment unit for self-propelled maize forage harvester (20) according to any one of claims 1 to 10, comprising first fastening means (153, 453) for detachably attaching a cutting head (12) for maize to the frame, wherein the cutting head is of a type which can be attached separately to the forage harvester (20), and second fastening means (151, 152) for detachably attaching a maize-threshing head (13) to the frame.

14. Frame according to claim 13, wherein the first and second fastening means are configured to respectively position the cutting head (12) and the maize-threshing head (13) with respect to each other in such a manner that, during an operation of the forage harvester, a maize stem is first gripped by the maize-threshing head, after which the stem is cut down by the cutting head.

15. Frame (15) according to claim 13 or 14, comprising third fastening means (11) for attaching the intermediate frame (15) to the forage harvester (20).

## Patentansprüche

1. Abnehmbare vordere Zubehöreinheit (10, 40) eines Maishäckslers (20) mit Eigenantrieb, umfassend:
- ein Unterteil (12), umfassend eine Schneidevorrichtung (121), die zum Fällen von Maispflanzen konfiguriert ist, und eine Fördervorrichtung (123), die zum Befördern der gefällten Pflanzen zu einer Einfüllöffnung (124) konfiguriert ist, wobei die Einfüllöffnung (124) derart konfiguriert ist, dass sie mit einer Einlassöffnung (21) des Maishäckslers verbunden ist, wobei das Unterteil Befestigungsmittel (128) zur unmittelbaren Befestigung am Maishäcksler umfasst, und
- ein oberhalb des Unterteils angeordnetes Oberteil (13), wobei Ober- und Unterteil (12) relativ zueinander schwenkbar angeordnet sein können, wobei das Oberteil eine Trennvorrichtung (131), die zum Trennen der Maisähren vom Stamm konfiguriert ist, eine Fördervorrichtung (138) und eine Auslassöffnung (139) umfasst, wobei die Fördervorrichtung zum Befördern der abgetrennten Maisähren zur Auslassöffnung konfiguriert ist und wobei die Trennvorrichtung Greifmittel (135) zum Eingreifen in den Maisstamm sowie Trennmittel (133, 134) zum Trennen der Ähren vom Stamm umfasst,
**dadurch gekennzeichnet, dass** das Oberteil (13) relative zum Unterteil (12) derart angeordnet ist, dass beim Betrieb des Maishäckslers ein Maisstamm zunächst in die Greifmittel (135) der Trennvorrichtung eingreift und der Stamm danach von der Schneidevorrichtung (121) des Unterteils abgeschnitten wird, und dass die vordere Zubehöreinheit (10, 40) ein Zwischengestell (15, 45) umfasst, wobei das Zwischengestell erste Befestigungsmittel (153, 453) zum Befestigen des Unterteils (12) am Zwischengestell (15, 45) und zweite Befestigungsmittel (151, 152) zum Befestigen des Oberteils (13) am Zwischengestell umfasst, wobei das Unterteil derart konfiguriert ist, dass es über die ersten Befestigungsmittel (153, 453) abnehmbar am Zwischengestell befestigt wird, damit das Unterteil im Maishäcksler sowohl getrennt, d.h. ohne Zwischengestell und Oberteil, eingesetzt und in die vordere Zubehöreinheit integriert werden kann.

2. Zubehöreinheit nach Anspruch 1, wobei das Unterteil ein reihenunabhängiger Vorsatz eines Maishäckslers mit Eigenantrieb ist.

3. Zubehöreinheit (10) nach einem der vorstehenden Ansprüche, wobei das Zwischengestell (15) dritte Befestigungsmittel (11) zum Befestigen des Zwischengestells (15) am Maishäcksler (20) umfasst.

4. Zubehöreinheit (10) nach einem der vorstehenden Ansprüche, wobei die ersten Befestigungsmittel (153) des Zwischengestells (15) zur Befestigung an den Befestigungsmitteln (128) des Unterteils (12) konfiguriert sind.

5. Zubehöreinheit (40) nach Anspruch 1 oder 2, die derart konfiguriert ist, dass sie über die Befestigungsmittel (128) des Unterteils (12) am Maishäcksler (20) befestigt wird.

6. Zubehöreinheit nach einem der vorstehenden Ansprüche, wobei die zweiten Befestigungsmittel (152) eine schwenkbare Befestigung des Oberteils (13) am Zwischengestell (15) gewährleisten.

7. Zubehöreinheit nach einem der vorstehenden Ansprüche, wobei die Schneidevorrichtung (121) den Greifmitteln (135) nachgelagert ist.

8. Zubehöreinheit nach einem der vorstehenden Ansprüche, wobei das Zwischengestell (15) eine zum Antreiben des Oberteils (13) konfigurierte Getriebevorrichtung umfasst.

9. Zubehöreinheit nach einem der vorstehenden Ansprüche, wobei eine Arbeitsgeschwindigkeit der Greifmittel (135) relativ zu einer Arbeitsgeschwindigkeit der Schneidevorrichtung (121) und/oder der Fördervorrichtung (123) geregelt werden kann.

10. Zubehöreinheit nach einem der vorstehenden Ansprüche, wobei die Einfüllöffiung (124) im Unterteil zentral angeordnet ist, während die Auslassöffnung (139) des Oberteils auf einer Seite angeordnet ist.

11. Kombination aus einem Maishäcksler (20) mit Eigenantrieb und einer vorderen Zubehöreinheit (10) nach einem der vorstehenden Ansprüche.

12. Kombination nach Anspruch 11, wobei der Maishäcksler (20) keine Maisdreschvorrichtung umfasst.

13. Gestell (15, 45) zur Verwendung in einer vorderen Zubehöreinheit eines Maisfeldhäckslers (20) mit Eigenantrieb nach einem der Ansprüche 1 bis 10, umfassend erste Befestigungsmittel (153, 453) zum abnehmbaren Befestigen eines Schneidkopfes (12) für Mais am Gestell, wobei der Schneidkopf derart ist, dass er getrennt am Feldhäcksler (20) befestigt werden kann, sowie zweite Befestigungsmittel (151, 152) zum abnehmbaren Befestigen eines Maisdreschkopfes (13) am Gestell.

14. Gestell nach Anspruch 13, wobei die ersten und zweiten Befestigungsmittel derart konfiguriert sind, dass sie jeweils den Schneidkopf (12) und den Maisdreschkopf (13) relativ zueinander derart positionieren, dass beim Betrieb des Feldhäckslers ein Maisstamm zuerst vom Dreschkopf gegriffen wird und danach vom Schneidkopf abgeschnitten wird.

15. Gestell (15) nach Anspruch 13 oder 14, umfassend dritte Befestigungsmittel (11) zum Befestigen des Zwischengestells (15) am Feldhäcksler (20).

## Revendications

1. Unité de fixation frontale détachable (10, 40) pour une ensileuse à maïs automotrice (20), comprenant :
- une partie inférieure (12) comprenant un dispositif de coupe (121) configuré pour couper des plants de maïs, et un dispositif d'alimentation (123) configuré pour évacuer les plants coupés vers une ouverture d'alimentation (124) qui, après le montage de l'unité de fixation frontale sur l'ensileuse à maïs, est configurée pour communiquer avec une ouverture d'entrée (21) de l'ensileuse à maïs, la partie inférieure comprenant un moyen de fixation (128) destiné à la fixation directe sur l'ensileuse à maïs, et
- une partie supérieure (13) qui est disposée au-dessus de la partie inférieure, dans laquelle la partie supérieure et la partie inférieure (12) peuvent être disposées de manière pivotante l'une par rapport à l'autre, dans laquelle la partie supérieure comprend un dispositif de séparation (131) configuré pour séparer les épis de maïs de la tige, un dispositif de transport (138) et une sortie (139), dans laquelle le dispositif de transport est configuré pour transporter les épis de maïs séparés vers la sortie, et dans laquelle le dispositif de séparation comprend un moyen de préhension (135) destiné à s'engager avec la tige de maïs et un moyen de séparation (133, 134) destiné à séparer les épis de la tige,
**caractérisée en ce que** la partie supérieure (13) est disposée par rapport à la partie inférieure (12) de sorte que, pendant le fonctionnement de l'ensileuse à maïs, une première tige de maïs s'engage avec le moyen de préhension (135) du dispositif de séparation, après quoi la tige est coupée par le dispositif de coupe (121) de la partie inférieure, et **en ce que** l'unité de fixation frontale (10, 40) comprend un châssis intermédiaire (15, 45), le châssis intermédiaire comprenant des premiers moyens de fixation (153, 453) destinés à fixer la partie inférieure (12) sur le châssis intermédiaire (15, 45) et des seconds moyens de fixation (151, 152) destinés à fixer la partie supérieure (13) sur le châssis intermédiaire, dans laquelle la partie inférieure est configurée pour être fixée sur le châssis intermédiaire de façon détachable via les premiers moyens de fixation (153, 453), de sorte que la partie inférieure puisse être utilisée séparément pour l'ensileuse à maïs, sans le châssis intermédiaire et la partie supérieure, et intégrée à l'unité de fixation frontale.

2. Unité de fixation frontale selon la revendication 1, dans laquelle la partie inférieure est une tête indépendante des rangs pour une ensileuse à maïs automotrice.

3. Unité de fixation frontale (10) selon l'une quelconque des revendications précédentes, dans laquelle le châssis intermédiaire (15) comprend un troisième moyen de fixation (11) destiné à fixer le châssis intermédiaire (15) sur l'ensileuse à maïs (20).

4. Unité de fixation frontale (10) selon l'une quelconque des revendications précédentes, dans laquelle le premier moyen de fixation (153) du châssis intermédiaire (15) est configuré pour être relié au moyen de fixation (128) de la partie inférieure (12).

5. Unité de fixation frontale (40) selon la revendication 1 ou 2, qui est configurée pour être reliée à l'ensileuse à maïs (20) par fixation, via le moyen de fixation (128) de la partie inférieure (12).

6. Unité de fixation frontale selon l'une quelconque des revendications précédentes, dans laquelle le second moyen de fixation (152) assure une fixation pivotante de la partie supérieure (13) sur le châssis intermédiaire (15).

7. Unité de fixation frontale selon l'une quelconque des revendications précédentes, dans laquelle le dispositif de coupe (121) est disposé en aval par rapport au moyen de préhension (135).

8. Unité de fixation frontale selon l'une quelconque des revendications précédentes, dans laquelle le châssis intermédiaire (15) comprend un dispositif de transmission configuré pour entraîner la partie supérieure (13).

9. Unité de fixation frontale selon l'une quelconque des revendications précédentes, dans laquelle une vitesse de fonctionnement du moyen de préhension (135) peut être contrôlée par rapport à une vitesse de fonctionnement du dispositif de coupe (121) et/ou du dispositif d'alimentation (123).

10. Unité de fixation frontale selon l'une quelconque des revendications précédentes, dans laquelle l'ouverture d'alimentation (124) située dans la partie inférieure est disposée au centre, tandis que la sortie (139) de la partie supérieure est disposée sur un côté.

11. Combinaison d'une ensileuse à maïs automotrice (20) et d'une unité de fixation frontale (10) selon l'une quelconque des revendications précédentes.

12. Combinaison selon la revendication 11, dans laquelle l'ensileuse à maïs (20) ne comprend pas un dispositif de battage de maïs.

13. Châssis (15, 45) destiné à être utilisé dans une unité de fixation frontale pour une moissonneuse-batteuse de maïs automotrice (20) selon l'une quelconque des revendications de 1 à 10, comprenant des premiers moyens de fixation (153, 453) destinés à fixer de manière détachable une tête de coupe (12) du maïs sur le châssis, dans lequel la tête de coupe est d'un type qui peut être fixé séparément sur la moissonneuse-batteuse (20), et des seconds moyens de fixation (151, 152) destinés à fixer de manière détachable une tête de battage de maïs (13) sur le châssis.

14. Châssis selon la revendication 13, dans lequel les premiers et les seconds moyens de fixation sont configurés pour positionner respectivement la tête de coupe (12) et la tête de battage du maïs (13) l'une par rapport à l'autre de sorte que, pendant le fonctionnement de la moissonneuse-batteuse, une tige de maïs soit tout d'abord attrapée par la tête de battage de maïs, après quoi la tige est coupée par la tête de coupe.

15. Châssis (15) selon la revendication 13 ou 14, comprenant des troisièmes moyens de fixation (11) destinés à fixer le châssis intermédiaire (15) sur la moissonneuse-batteuse (20).
